Europäisches Patentamt

European Patent Office

Office européen des brevets

(11) Publication number: **0 241 461**
**B1**

# (12) EUROPEAN PATENT SPECIFICATION

(45) Date of publication of patent specification: **10.01.90**

(51) Int. Cl.⁵: **E 04 B 5/48** // E04B1/70

(21) Application number: **85905543.6**

(22) Date of filing: **28.10.85**

(86) International application number:
**PCT/SE85/00422**

(87) International publication number:
**WO 86/02684 09.05.86 Gazette 86/10**

(54) **A VENTILATED FLOOR.**

(30) Priority: **30.10.84 SE 8405423**

(43) Date of publication of application:
**21.10.87 Bulletin 87/43**

(45) Publication of the grant of the patent:
**10.01.90 Bulletin 90/02**

(84) Designated Contracting States:
**AT CH DE FR GB LI NL**

(56) References cited:
**DE-A-2 165 796**
**FR-A-2 257 753**
**NO-B- 150 736**
**SE-A-82 035 791**

(73) Proprietor: **AF KLINTEBERG, Peter**
**Storgatan 2**
**S-285 00 Markaryd (SE)**

(72) Inventor: **AF KLINTEBERG, Peter**
**Storgatan 2**
**S-285 00 Markaryd (SE)**

(74) Representative: **Wallengren, Yngvar**
**Patentbyran Y Wallengren AB Box 116**
**S-331 01 Värnamo (SE)**

Courier Press, Leamington Spa, England.

## Description

### TECHNICAL FIELD

The present invention relates to a ventilated floor of the type comprising a spacer member resting on a base, or sleeper, floor and forming ducts, the spacer member having, on its upper face, a load-carrying layer with a floor covering thereon.

### BACKGROUND ART

Ventilated floors of the type mentioned by way of introduction have been employed in many contexts (for example DE—A—2 165 796), primarily in attempts to prevent damp in the base or sleeper floor from rising to superjacent constructions, thereby causing damage. If damp is present to but a limited degree, such a prior art construction may possibly be sufficient in itself.

In other situations where the base or sleeper floor consists of such material which, because of damage which has occurred, for example as the result of mildew, damp, rot or the like, cannot be cleaned sufficiently so as to be odour-free, the aforementioned construction will be clearly insufficient.

Particularly serious situations may arise in such constructions in which certain types of plastic floor coverings or coatings have been glued to a substrate and in which the migration of plasticizer agents has taken place down into the glue at the same time as damp has attacked from below. In such extremities it may very well be not uncommon that the combination of glue, damp and plasticizer agent may result in highly noxious byproducts which penetrate down into the sleeper floor and which can never be subsequently removed. Using prior art techniques, the repair of such damage would entail that the sleeper floor would need to be completely removed and replaced by a new sleeper floor.

### PROBLEM

Thus, the present invention has for its object to realise a ventilated floor of the type intimated by way of introduction, the floor being designed in such a manner as to obviate even very serious damp problems, and, moreover, to obviate problems inherent in persistent odour from earlier damage.

### SOLUTION

According to the present invention, this object is attained if the ventilated floor disclosed by way of introduction is characterised in that the floor is connected, along a first edge portion, to a profile which is closed in relation to its ambient surroundings, the profile being sealed against the upper face of the floor and against a wall connecting to the floor, the closed profile being provided with openings in communication with ducts in the spacer member, and being connected to a suction fan; that the floor has, along a second edge portion, a flow passage from the ambient surroundings and to the ducts of the spacer member; and that the floor is, along remaining edge portions, sealingly connected to walls connecting therewith.

The present invention is suitably also characterised in that a filter is disposed in the flow passage along the second edge portion.

In such situations where, despite the arrangement according to the present invention, it is not possible to maintain absolutely constant moisture content, primarily in the load-carrying layer, it further suitably applies according to the present invention that the closed profile is provided with a shank which extends out over the first edge portion and is provided with a sliding seal against the upper face of the floor. As a result of these constructional features, the considerable advantage will be gained that the floor construction, and primarily the load-carrying layer, may be permitted movement in its own plane without disrupting the sealing function against the closed profile.

### BRIEF DESCRIPTION OF THE ACCOMPANYING DRAWINGS

The nature of the present invention and its aspects will be more readily understood from the following brief description of the accompanying Drawings, and discussion relating thereto.

In the accompanying Drawings:

Fig. 1 is a schematic cross-section through a first embodiment of the present invention; and

Fig. 2 is a cross-section through a second embodiment of the present invention.

### DESCRIPTION OF PREFERRED EMBODIMENT

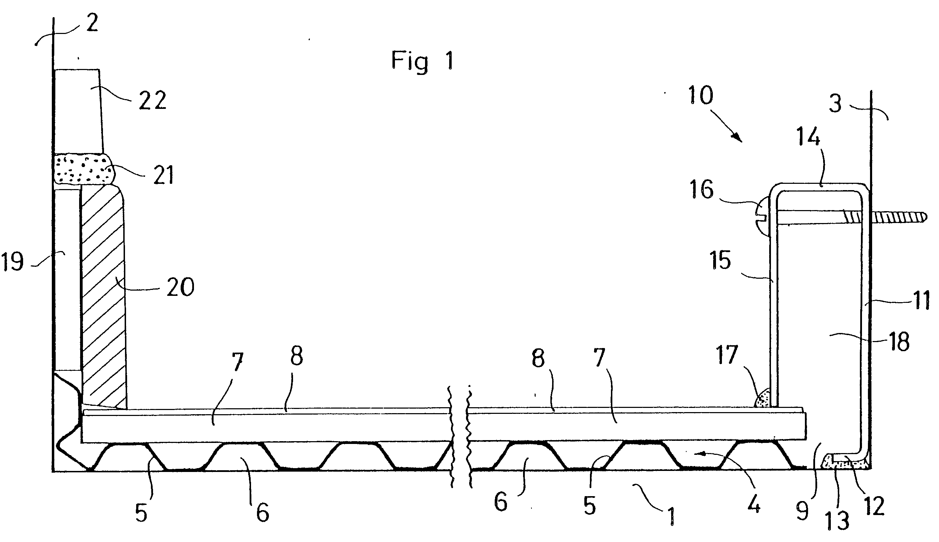

Referring to the Drawings, Fig. 1 shows, by reference numeral 1, the material of a base, or sleeper floor, by reference numeral 2 a first wall connecting to the sleeper floor, and by reference numeral 3 a second wall connecting to the floor.

According to the present invention, there is disposed, on the upper face of the sleeper floor, a spacer member 4 which may consist of a so-called plateau pad which has cup-like projections 5, disposed in alternate rows, so that there are formed therebetween free duct spaces 6 which preferably have their major surface turned to face the sleeper floor 1. Furthermore, the cup-like projections 5 are dimensioned in such a manner as to possess a considerable load-carrying capacity and are placed such that the plateau pad is capable of absorbing the loadings which may normally be placed on a floor.

The use of a plateau pad of the above-outlined design will gain the considerable advantage that the ducts 6 will extend in both directions and that they, moreover, cover the greater part of the upper face of the sleeper floor 1.

On the upper side of the spacer member 4, there is disposed a panel 7 or a load-carrying member which, in practice, may consist of chipboard, masonite or similar material. Finally, on the upper face of the panel 7, there is provided a floor covering 8 which may consist of a glued plastic matting or the like.

According to the present invention, the purpose of the panel 7 is to distribute the loadings which may rest upon the floor in such a manner that the spacer member 4 is not locally overloaded, which would thereby possibly compress the cup-like projections 5.

According to the present invention, it may be seen as essential that either the panel 7 or the floor covering 8 be tight so that no air may penetrate through these members.

In one alternative to the construction shown on the Drawings, it is possible to employ a thermally insulating layer, which, in such a case, may be placed on the upper face of the panel 7 and, naturally, designed and dimensioned in such a manner as to be capable of taking up the loadings which normally rest on a floor. The upper face of this thermally insulating layer may then suitably be fitted with a new panel or nailable covering, on which, for example, a parquet floor, wall-to-wall carpeting or some other floor covering material may be placed. In such cases when the thermally insulating layer is not wholly tight to air penetration, there should be provided, according to the present invention, an interjacent barrier layer which prevents air from flowing from the upper face of the floor down into the ducts 6 in the spacer member 4. Such a barrier layer may, for example, consist of the floor covering 8 proper, but could just as well comprise a separate plastics sheeting or the like.

A first edge portion of the floor according to the present invention is designed in such a manner that there is formed a gap 9 between the edge portions of the floor covering 8 and the panel 7, adjacent the proximal wall 3. In this region, there is further disposed a floor moulding 10 which is in the form of a hollow plastic or metal profile and has a wall 11 connecting to the wall 3, there being provided, at the lower end of this wall 11, an inwardly angled portion 12 which is intended for the vertical positional fixation of the profile and for sealing thereof against the sleeper floor 1 and the wall 3. Suitably, the sealing here may be realised by means of a putty strand, or by a sealing strip 13 manufactured of rubber or plastics. Furthermore, the profile has an upper wall 14 and an outer wall 15 which may be approximately parallel to the wall 11. For anchorage of the profile 10, screws 16 may be employed which, with suitable spacing, extend straight through the profile and into the wall 3.

The floor moulding 10 may, according to the invention, be considered as a closed channel, the outer wall 15 of the floor moulding being, at its lower end, provided with a sealing strip 17 or a strand of sealing putty which seals against the floor covering 8.

It will be apparent from the above description of the floor construction and the profile 10 that the ducts 6 disposed in the spacer member 4 discharge freely into the interior 18 of the profile 10. Furthermore, the profile 10 is connected, at a suitable point, to a conduit which, in its turn, is in communication with a suction fan, whereby this suction fan may, consequently, suck out such air as is located in the ducts 6.

The floor according to the present invention is of a design along a second edge portion which is apparent from the left-hand half of the Drawings. Thus, the spacer member 4 extends up a short distance along the wall 2 so that the ducts 6 may extend about the end edge of the panel 7 and discharge upwardly on the outside of the wall 2. Above the upper edge of the portion of the spacer member 4 bent up towards the wall 2, there are disposed a number of spacers 19 whose purpose is to hold a floor moulding spaced from the wall 2 so that there are formed, on the rear face of the floor moulding 20, flow passages in communication with the ducts 6 in the spacer member 4. Furthermore, there is disposed, on the upper face of the floor moulding 20 and the spacers 19, an elongate filter body 21 which is held in place by means of an upper retainer strip 22. In this case, the filter body functions such that it realises a partial vacuum in the ducts 6, at the same time as preventing the entry of dust, dirt and other foreign matter into these ducts. The partial vacuum prevailing in the ducts 6 is advantageous in at least two ways, first by creating a force urging the panel 7 against the sleeper floor 1, thus preventing the occurrence of bubbles or blisters in the panel 7; and secondly in that the partial vacuum facilitates an upward damp migration in the sleeper floor 1 and, to a certain extent, also causes evaporation of the rising damp.

According to the present invention, those portions of the floor which are fitted with the profile 10 and the flow passages behind the floor moulding 20 should be of such mutual spacing that the air flow substantially covers the whole of the underface of the spacer member 4. In order to realise this situation, it may be appropriate that those portions of the edges of the floor which are not designed in the aforementioned manner be sealed-off by means of conventional floor mouldings, possibly in combination with sealing strips, against their connecting walls.

In certain situations, it may occur that the temperature of the sleeper floor 1 is considerably lower than the temperature of the air sucked in through the filter body 21, for example if a thermally insulating layer is placed on the spacer member 4 or if the sleeper floor is directly recumbent on cold ground without subjacent thermal insulation. If, in such an instance, the RH of the intake air is high, the situation may, theoretically speaking, arise that there is precipitation of the moisture entrained with the incoming air when the temperature of this air is reduced on contact with the sleeper floor 1. In order to preempt such situations, two alternative methods may be selected.

First, the temperature in the sleeper floor 1 may, naturally, be monitored and adjusted in relation to temperature and RH of the air which is sucked in beneath the spacer member 4. When critical values subsequently occur of the measured parameters, the suction fan in communication with the profile 10 may quite simply be stopped. It might possibly also be sufficient to measure the temperature of the air which flows in through the filter body 21 and of the air which is located in the interior 18 of the profile 10. When the temperature in the interior 18 of the profile 10 falls to a level which deviates considerably from the temperature of the incoming air, this may be interpreted as a signal of low temperature in the ducts 6 and a consequential, possibly critical, damp situation in the ducts. Naturally, the suction fan should also be shut-off in this case. Finally, it is also possible directly to measure the RH down beneath the spacer member.

Secondly, in order to counteract the apprehended moisture precipitation beneath the spacer member 4, it is possible to raise the temperature in that region, which can be effected by increasing the air flow so that the airborne heat is sufficient to raise the temperature of the sleeper floor to a safe level. Alternatively, or as a complement, it is also, naturally, possible to treat the intake air by a temperature increase and/or by dehumidification.

DESCRIPTION OF ALTERNATIVE EMBODIMENTS

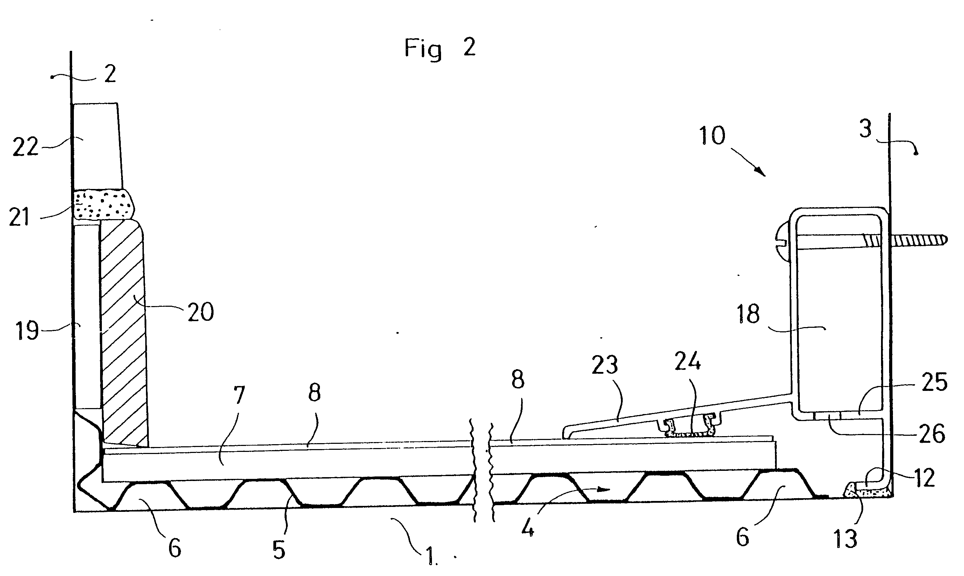

Fig. 2 shows a construction which may be considered as a floating floor structure. This construction is particularly suitable in large continuous floors where the creepage which may occur because of varying damp or temperature conditions in the floor material may be great.

In the embodiment illustrated in Fig. 2, the panel 7 is suitably positionally fixed at the floor moulding 20 in the left-hand edge of the Drawing. Those movements which the panel 7 undergoes on varying humidity conditions will, on the other hand, be taken up at the right-hand edge portion in the Drawing. In order to permit such movements between the panel 7 and the wall 3, the profile 10 is provided with a shank 23 which extends out over an edge portion of the panel 7 and the floor covering 8. On the underface of this shank 23, there are disposed longitudinal anchorages for retaining a sealing strip 24 of rubber or suitable plastics material, this sealing strip being appropriately designed so as to slide on the upper face of the floor covering 8 or otherwise be designed so as to execute a rolling movement in relation to the floor covering.

The profile 10 illustrated in Fig. 2 is, furthermore, modified in such a manner that the portion connecting to the wall 3 is designed as a tube of rectangular cross-section, this affording a very high degree of stability and resistance against mechanical action. In order to establish a communication between the interior 18 of this tube and the spacer member 4, there is disposed a series of openings 26 in the bottom wall 25 of the tube, these openings placing the interior of the profile in communication with the ducts 6 in the spacer member 4.

The placing of the bottom wall 25 is not especially critical, but, naturally, it should be placed at such a height above the inwardly bent portion 12 that the panel 7 can be slid in beneath the bottom wall without the risk of blocking the openings 26.

In such constructions where the floor space areas are very large and where, consequently, the creepage movements in the panel 7 can be considerable, it can be inadvisable to provide for the absorption of these creepage movements along one wall alone. In such a situation, the floor moulding 20 may be substituted by a profile similar to the profile 10 of Fig. 2, the profile being solely sealed at its ends and/or the openings 26 being dispensed with. It further suitably applies that the sealing strip 24 may be substituted by a filter element with the same function as the filter element 21 in the embodiment according to Fig. 1. Alternatively, the sealing strip 24 may, naturally, be retained and instead the interior 18 of the profile may be filled with a filter material, at the same time as the openings 26 are, naturally, retained.

According to the present invention, the floor moulding 20 in both the embodiments of Fig. 1 and Fig. 2 may be replaced by a floor moulding of the type which is provided with a series of recesses in its lower edge. In such an instance, the spacers 19 are also dispensed with, as well as the portion of the spacer member bent up towards the wall 2, thereby the flow spaces will be formed by the recesses of the floor moulding about the end edge of the panel 7 and down into the ducts 6. Some form of filter element should also be employed in this embodiment, being suitably disposed in the recesses of the floor moulding or in the space between the end edge of the panel 7 and the wall 2.

In such situations where treatment of the incoming air beneath the spacer member is to be effected, the floor moulding 20 or its counterpart must be replaced by a closed channel-forming moulding of the type which, in principle, is employed on the discharge side.

The present invention should not be considered as restricted to that described above and shown on the Drawings, many modifications being conceivable without departing from the spirit and scope of the appended Claims.

**Claims**

1. A ventilated floor including a spacer member (4) resting on a sleeper floor (1) and forming ducts (6), the spacer member having, on its upper face, a load-carrying layer (7) with a floor covering (8), characterised in that the floor is connected, along a first edge portion, to a profile (10) which is closed to its ambient surroundings and is sealed against the upper face of the floor, and against a wall (3) connecting with the floor, the closed profile having openings (9; 26) in communication with the ducts (6) in the spacer member (4) and being connected to a suction fan; that the floor has, along a second edge portion, a flow passage from the ambient surroundings and to the ducts of the spacer member; and that the floor is, along remaining edge portions, in sealing connection with walls connecting thereto.

2. The ventilated floor as claimed in claim 1, characterised in that there is disposed a filter (21) in the flow passage along the second edge portion.

3. The ventilated floor as claimed in claim 1 or 2, characterised in that the closed profile (10) is provided with a shank (23) extending out over the first edge portion, the shank having sliding or rolling sealing (24) against the upper face of the floor.

**Patentansprüche**

1. Ein belüfteter Fußboden, mit einem Abstandselement (4), welches einem Unterboden (1) aufliegt und Kanäle (6) bildet, wobei an der oberen Fläche des Abstandselementes eine lastaufnehmende Schicht (7) mit einem Bodenbelag (8) vorgesehen ist, dadurch gekennzeichnet,

daß der Fußboden entlang einer ersten Kante mit einem Profil (10) verbunden ist, welches gegen seine Umgebung abgeschlossen und gegen die Oberfläche des Fußbodens und gegen eine an den Fußboden anschließende Wand (3) abgedichtet ist, wobei das geschlossene Profil Öffnungen (9; 26) aufweist, die mit den Kanälen (6) im Abstandselement (4) in Verbindung stehen und an ein Sauggebläse angeschlossen sind,

daß der Fußboden entlang einer zweiten Kante einen Durchflußkanal aufweist, der von der Umgebung in die Kanäle (6) des Abstandselementes (4) führt, und

daß der Fußboden entlang der übrigen Kanten in dichter Verbindung mit den anschließenden Wänden steht.

2. Ein belüfteter Fußboden nach Anspruch 1, dadurch gekennzeichnet, daß in dem Durchflußkanal entlang der zweiten Kante ein Filter (21) angebracht ist.

3. Ein belüfteter Fußboden nach Anspruch 1 oder 2, dadurch gekennzeichnet, daß das geschlossene Profil (10) eini überstehendes Stück (23) aufweist, das sich über die erste Kante erstreckt, und an dem eine gleitende oder rollende, mit der Oberfläche des Fußbodens zusammenwirkende Dichtung (24) angebracht ist.

**Revendications**

1. Plancher ventilé comprenant un élément d'espacement (4) qui repose sur un plancher fixe (1) et définit des conduits (6), l'élément d'espacement comportant, sur sa face supérieure, une couche de portée de charge (7) avec un revêtement de sol (8), caractérisé en ce que le plancher est raccordé, le long d'une première partie de bord, à un profilé (10) qui est isolé de son environnement ambiant et est en contact étanche avec la face supérieure du plancher et avec une paroi (3) reliée au plancher, le profilé fermé comportant des trous (9; 26) en communication avec les conduits (6) de l'élément d'espacement (4) et étant raccordé à un ventilateur d'aspiration; en ce que le plancher comporte, le long d'une deuxième partie de bord, un passage de circulation à partir de l'environnement ambiant et vers les conduits de l'élément d'espacement; et en ce que le plancher est en contact étanche, le long des parties de bord restantes, avec les parois reliées au plancher.

2. Plancher ventilé suivant la revendication 1, caractérisé en ce qu'un filtre (21) est placé dans le passage de circulation, le long de la deuxième partie de bord.

3. Plancher ventilé suivant la revendication 1 ou 2, caractérisé en ce que le profilé fermé (10) comporte une aile (23) qui s'étend au-dessus de la première partie de bord, l'aile portant une étanchéité glissante ou roulante (24) contre la face supérieure du plancher.

Fig 1

Fig 2